# EUROPEAN PATENT SPECIFICATION

(11) **EP 0 798 963 B1**
(45) Date of publication and mention of the grant of the patent: **03.02.1999**
(21) Application number: 95940990.5
(22) Date of filing: 20.11.1995
(51) Int. Cl.: A23D 9/05, A23D 9/007, A23D 9/02

(54) **GRANULAR COMPOSITION FOR ICE-CREAM INCLUSIONS**
PARTIKELZUSAMMENSETZUNG FÜR SPEISEEISEINSATZ
COMPOSITION GRANULAIRE DESTINEE A DES PEPITES POUR CREMES GLACEES

(30) Priority: 19.12.1994 EP 94203673
(43) Date of publication of application: 08.10.1997
(73) Proprietor: LODERS CROKLAAN B.V., 1521 AX Wormerveer (NL)
(72) Inventor: MANSON, Helga, NL-1186 HX Amstelveen (NL); MAN, Hangkam, NL-3823 GL Amersfoort (NL); CAIN, Frederick, William, NL-2271 VL Voorburg (NL); VAN DONGEN, Laurentius, Franciscus, J., NL-1504 GA Zaandam (NL)
(74) Representative: Rosen Jacobson, Frans Lucas M.
(86) International application number: EP9504568
(87) International publication number: WO9619116

(56) References cited:
- EP-A- 0 385 081
- EP-A- 0 483 414
- EP-A- 0 564 077
- WO-A-80/01749
- WO-A-81/00190
- WO-A-91/09537
- WO-A-91/18522
- FR-A- 1 157 311
- FR-A- 1 486 674
- GB-A- 2 260 685
- US-A- 1 444 562
- US-A- 3 295 986
- US-A- 4 397 880

## Description

Ice-creams, provided with chocolate or chocolate-like inclusions are known in the prior art. Examples being strachiatella ice-cream, wherein the inclusions consist of cocoa butter based chocolate. Another example of inclusions is given in EP 502,697, wherein the inclusions are present as chips, containing a fat phase. The fat phase prescribed by EP 502,697 comprises a chocolate oil ingredient, comprising 10-85 wt% of disaturated triglycerides (i.e.: S₂U, S=saturated; U=unsaturated fatty acids) and 15 - 90 wt% of di-unsaturated triglycerides (i.e.: SU₂), while at least 35 wt% of SU₂ consists of S₂Ln (Ln=linoleic acid).

Above compositions, however, do have a number of drawbacks. The main disadvantage of cocoa butter is, that although its hardness at 20°C is excellent, so that it provides a good bite to chocolate products, upon use at - 20°C (= ice-cream temperature) the chocolate becomes far too hard.

The solution given by the EP-document results in chocolate that requires a fat composition that is rather high in S₂Ln triglycerides. These S₂Ln-triglycerides have to be prepared by a chemical route, which requires e.g. the use of enzymic interesterification techniques.

It is further known from US 3.295.986, that the use of dried emulsions, containing fats with a controlled dilatation, thus increasing the solids content index of the total fat phase of the dried emulsion, can improve the performance, such as whippability, texture, overrun etc. of a whip upon reconstitution with a liquid. The fat phase should exhibit a plastic range, sothat it melts readily in the mouth. To achieve this the fat should have a steep solid content index between 20°C and 37°C. Preferred fats have congeal points between 30 and 40°C. Suitable fats are hydrogenated and partially hydrogenated vegetable fats. Nothing is disclosed about the use of blends of such fats and a food-grade filler material in ice-cream. WO 81/00190 deals with the problem of watertransfer between a composition, such as ice-cream, that contains water and a dry layer, such as a wafer, that will become, soggy, when it absorbs too much water from the ice-cream. In order to overcome above problem a fat was applied in a coating composition, with which the internal surface of the wafer was covered. This fat preferably had a solid content index of 70-93 at -20°C; of 65-93 at -10°C; of 55-90 at 0°C; of 15-40 at 20°C, of 0-12 at 30°C and 0 at 40°C. Nothing is disclosed about the use of these fats as part of the ice-cream mass. A similar teaching is disclosed in WO 80/01749. According to GB 2.260.685 chocolate compositions can be made, that upon use in ice-creams result in compositions with a brittle, snappy texture and which melt quickly and clearly in the mouth with a quick flavour release. For this purpose the chocolate-composition must have a solid content at -10°C of 100%. Specific examples of suitable fats are not disclosed. Only in the example some information can be found about the fat applied. The fat, mentioned there contained 10.8% palmitic, 7.3% stearic and about 74.7% oleic and was "a fractionated and selectively hydrogenated blend of vegetable oils." However it is difficult to understand how above fatty acid composition (in particular its oleic content) can exist for a "hydrogenated fat". Nothing is disclosed about solid fat contents (NMR-pulse, non-stabilized) at 20°C and/or 0°C. From the fact that the solid fat content at -10°C must be 100% could be concluded, that the fat is very hard, in fact too hard to be useful for our purposes. Therefore GB '685 does not provide information on how to come to a fat, that will perform at temperatures between 0 and -20°C as cocoabutter at 20°C

We have studied how we could overcome the draw-backs of above prior art. This study has resulted in novel blends, useful as inclusions in the form of compact amounts or in encapsulated form as free-flowing inclusions, embedded in an ice-cream mass. In those blends fractions of natural fats can be applied, although of course part of those fractions can also be replaced by enzymically made or otherwise synthesized fats.

So our invention concerns with the use of blends of
a) a food-grade filler material and
b) a fat, as ice-cream inclusions,
wherein the fat displays a solid fat content at the temperature indicated, measured according to NMR-pulse techniques on non-stabilized fat of:
N₂₀ < 60, preferably < 50, most preferably 15-40
N₀ < 85, preferably < 80, most preferably 55-75.
In those blends the amount of fat generally ranges from 5-95 wt%, preferably 30-60 wt%, while the amount of filler is 95-5 wt%, preferably 70-40 wt%. The food grade filler material is preferably at least one compound, selected from the group, consisting of: starches, modified starches, cocoa mass, carbohydrates, in particular sugar, dairy powder in particular butter milk powder and skim milk powder, cocoa powder and high intensity sweeteners.

The fats, that can be applied in above blends can be unhardened vegetable fats, completely free of trans fatty acids, or hardened or partially hardened fats, that can contain trans fatty acids, or fractions or mixture thereof. We prefer to apply the non-trans fats. These fats can be selected from the group consisting of:
(a) a blend of a lauric stearin-fraction, in particular palm kernel stearin or coconut stearin and a liquid oil, in particular selected from the group, consisting of sunflower oil, high oleic sunflower oil, soy-bean oil, rapeseed oil, olive oil, etc.
(b) a vegetable non-lauric fat or fat-fraction, containing at least 35 wt% of disaturated mono-unsaturated triglycerides, in particular palm oil fraction, blended with a liquid oil, selected from the group, consisting of sunflower oil, high oleic sunflower oil, rapeseed oil, soy-bean oil, olive oil etc. and
(c) a blend of hydrogenerated vegetable fat and one or more of the liquid oils mentioned above. Very suitable fat-components that can be applied in above blends include: dry fractionated palm oil stearin - mid fraction; palm oil midfractions, midfractions from hardened liquid oils, such as hardened soybean-39 or hardened palm oil olein-37.

The blend of lauric-stearin fraction and liquid oil preferably consist of 90 to 10 wt% of the lauric stearin fraction and 10 to 90 wt% of the liquid oil.

The blend of the vegetable non-lauric fat-fraction and the liquid oil preferably is composed of 90 to 10 wt% of the vegetable fat and 10 to 90 wt% of the liquid oil. In the blends of hydrogenerated fats and liquid oils similar ratio's of 90 : 10 to 10 : 90 can be applied.

The main advantage of the use of our blends is, that the inclusions are made from a blend of food grade filler material and fat, that displays at -20°C a hardness C according to Stevens after 1 week storage at -20°C, that is preferably plus or minus 40% of the hardness of cocoa butter at 20°C after storage for 1 week at 20°C (0.6 C_{CB at 20°C} < C_{blend at -20°C} < 1.4C_{CB at 20°C}). However it is also possible to apply blends having a hardness according to: 0.4 C_{CB at 20°C} < C_{blend at -20°C} < 2.5 C_{CB at 20°C}. So our blends display at -20°C the excellent performance of cocoa butter at 20°C.

Our blends of food grade filler material and fat can be used as inclusion in the form of compact blocks of the blend or in encapsulated form, in which case these blends are encapsulated in a coating material. Suitably the coating material comprises a fat in an amount of at least 10 wt%, preferably 20-60 wt%, most preferably 25-40 wt%, which fat has a solid fat index (NMR-pulse, not-stabilized) at 20°C of more than 30, preferably more than 50. Other components of the coating are food grade filler materials, preferably carbohydrates, in particular sugar. The amount of this component in the coating preferably is at least 45 wt%, most preferably at least 70 wt%. It is also possible to use a coating that is fat-free and comprises at least 45 wt%, preferably at least 90 wt% of sugar. Very suitable encapsulated products are obtained by using a coating fat that has a solid fat index at 20°C (stabilized or unstabilized), that is at least 20, preferably at least 35 units higher than the corresponding solid fat index of the fat component of the filling.

The coating for our encapsulated fat blends usually have a thickness of at least 0.05 mm, preferably at least 0.1 mm, most preferably 0.2-2.5 mm. The encapsulated blends of the invention normally comprise 25-95 wt% of the filling blend of fat and filler material, the remainder being coating material. The preferred range of the filling blend in our products is 60-80 wt%.

The encapsulated blends are free flowing at 20°C, preferably at temperatures of up to 30°C, due to the presence of a coating around our filling blend and so can easily be transported between different locations without having to apply expensive cooling regimes.

The encapsulated blends of the invention can have any form or shape. Preferred are, however, encapsulated blends, shaped like small balls, small boxes, small cubes, with a dimension of 0.01-20 cm in particular 0.1-5 cm for the radius or for the length of one or more edges. Ice-creams, containing the inclusions according to the invention are also part of the invention. Those ice-creams can contain any flavour, suitable for ice-creams, while also raisins, or small pieces of fruit can be present in those ice-creams.

### EXAMPLES

I Recipe
I.1 The following recipe was applied for the preparation of filling blends:

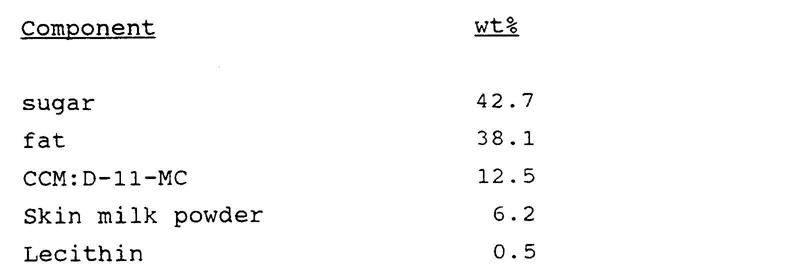

The following fats were applied:

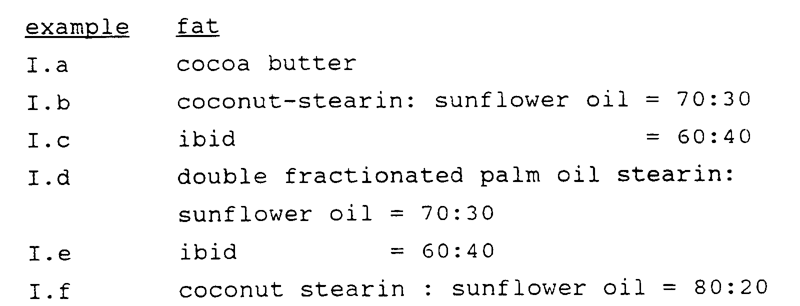

The fats displayed the following N-profile

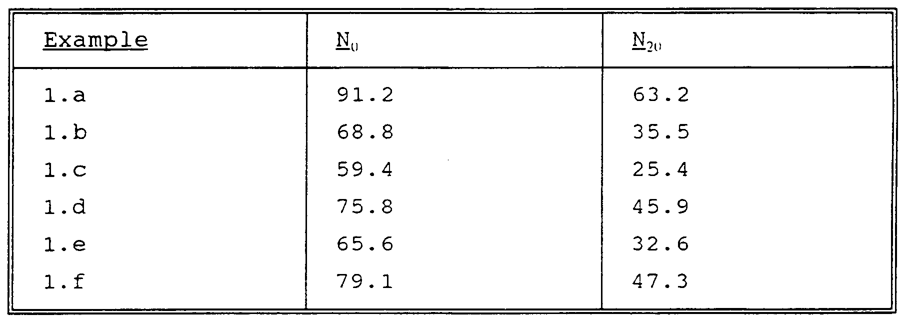

I.2 The filling blends I.a - I.f were stored at + 20°C, + 25°C and at - 20°C. The Stevens hardness C of these blends were measured after 1 week storage by penetration of a needle into the blends with a speed of 0.5 mm/sec for a depth of 2 mm. The following hardness were found:

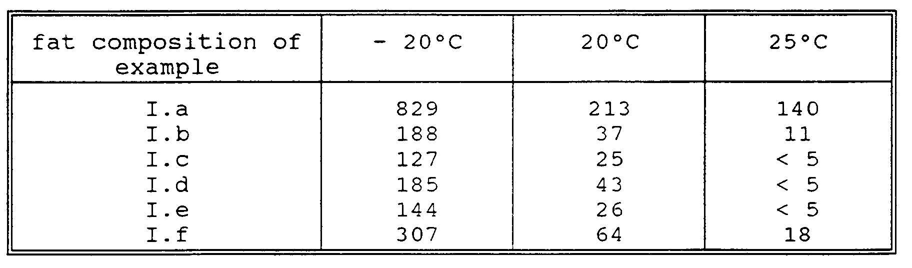

I.3 Coffee-bean shaped shells were moulded with the mixture according to recipe below. The shells had a weight of 0.3 g each. The shells were filled with the fillings I.c. and I.d. The filled shells were backed off with a base, comprising the mixture according to recipe below:

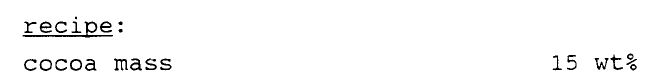

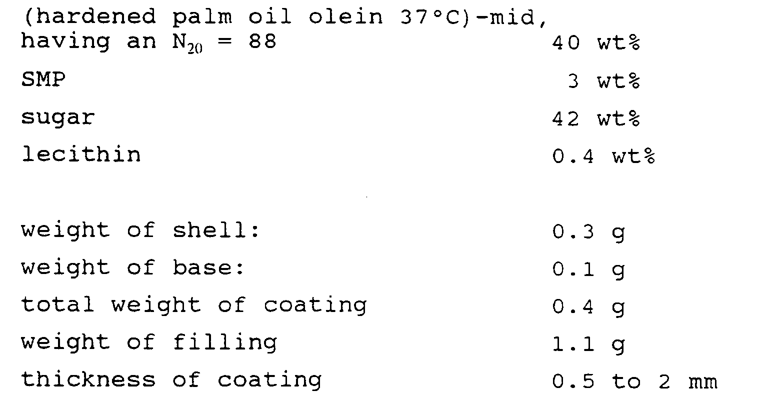

The products (inclusions) obtained were free flowing at ambient temperature.
I.4 Ice-creams with inclusions
Ice-creams were made, provided with 5 wt% of different coffee-bean shaped inclusions. A test panel evaluated the different inclusions. The results being:
I Inclusions based on cocoa butter: very hard, very waxy and low flavour release.
II Inclusions based on encapsulated blend Ic: much softer than I, quicker melting; less waxy; quicker and stronger flavour release.
III Inclusions based on encapsulated blend I.d: much softer than I, slightly harder than II, fast melting, less waxy, quick and strong flavour release.
IV Inclusions based on the coating recipe only: hard, waxy, slow flavour release.

II Drops were made from filling I.d. The drops were put into a sugar solution (75 wt% dry matter) and left there for one night. The drops, coated with sugar chrystals, were taken out of the solution, dried and put into ice-cream and stored at -20°C.

| | |
|---|---|
| Droplet weight: | 0.9 g |
| Weight sugar layer: | 0.35 g |
| Layer thickness: | 0.5-1.5 mm |

Compared to inclusions made with cocoabutter the sugar coated filling were: much softer, much quicker melting and less waxy.
The inclusions did not stick together when stored for 3 days at ambient temperature.
III. Recipe.
III.1 The recipe, mentioned in example I.1 was applied again. The fat was the fractionated palm-oil stearin-midfraction (i.e.: a fat rich in PPO, P=C_{16:0} : O=C_{18:1}) and sunflower oil (weight-ratio 70:30) (= blend 1.d).
III.2 Inclusions were made from above blend by coating effective amounts of the blend with:
(i) sugar (using sugar syrup with 75% dry matter; layer thickness: 0.5-1.5 mm; coating weight: 25% of total product), or with
(ii) a blend, corresponding with the recipe under I.1, however the fat was only the double-fractionated palm oil stearin-midfraction. (N₂₀, unstab. = 80). Layer thickness: 0.3-2.0 mm coating weight: 35% of total product.

III.3 The inclusions obtained were stored at 20°C and 25°C for at least one month. Shape and appearance of these inclusions remained constant during this period.
III.4 The inclusions were applied in ice-creams, and compared with inclusions based on chocolate.

We found, that our inclusions with sugar coating were much softer, quicker melting and, less waxy than the chocolate-inclusions. The inclusions with our fat-based coating (ii) were also much softer, quicker melting, less waxy and had quicker and stronger flavour release than the chocolate-inclusions.

## Claims

1. Ice-creams, containing inclusions, wherein the inclusions comprise a compact amount, optionally encapsuled in an edible layer, of a blend of
a) a food-grade filler material and
b) a fat
wherein the fat displays a solid fat content at the temperature indicated, measured according to NMR-pulse techniques on non-stabilized fat of:
N₂₀ < 60, preferably < 50, most preferably 15-40
N₀ < 85, preferably < 80, most preferably 55-75.

2. Ice-creams according to claim 1, wherein the blend comprises 5-95 wt%, preferably 30-60 wt% of the fat and 95-5 wt%, preferably 70-40 wt% of the filler material.

3. Ice-creams according to claims 1 or 2, wherein the food-grade filler material is at least one compound, selected from the group, consisting of: cocoa mass, starches, modified starches, carbohydrates, in particular sugar, dairy powder, skim milk powder, cocoa powder and high intensity sweeteners.

4. Ice-creams according to claims 1-3, wherein the fat is selected from the group consisting of:
(a) a blend of a lauric stearin-fraction, in particular palm kernel stearin or coconut stearin and a liquid oil, in particular selected from the group, consisting of sunflower oil, high oleic sunflower oil, soybean oil, rapeseed oil, olive oil, etc.
(b) a vegetable non-lauric fat or fat-fraction, containing at least 35 wt% of disaturated mono-unsaturated triglycerides, in particular palm oil fraction, blended with a liquid oil, selected from the group, consisting of sunflower oil, high oleic sunflower oil, rapeseed oil, soybean oil, olive oil etc. and
(c) a blend of hydrogenerated vegetable fat and a liquid oil.

5. Ice-creams according to claims 1-4, wherein the blend of food grade filler material and fat displays at -20°C a hardness C according to Stevens after 1 week storage at -20°C, that is plus or minus 40% of the hardness of cocoabutter at 20°C after storage for 1 week at 200 C (0.6 C_{CB at 20°C} < C_{blend at -20°C} < 1.4C_{CB at 20°C}).

6. Encapsulated blend, suitable as ice-cream inclusion, wherein the blend of food grade filler material and fat according to claims 1-5 is encapsulated in a coating material.

7. Encapsulated blend according to claim 6, wherein the coating material comprises a fat in an amount of at least 10 wt%, preferably 20-60 wt%, most preferably 25-40 wt%, which fat has a solid fat index (NMR-pulse, not-stabilized) at 20°C of more than 30, preferably more than 50.

8. Encapsulated blend according to claim 7, wherein the coating further comprises at least 45 wt%, preferably at least 70 wt% of food-grade filler material.

9. Encapsulated blend, according to claims 6 or 8, wherein the coating has a thickness of at least 0.05 mm, preferably at least 0.1 mm, most preferably 0.2-2.5 mm.

10. Encapsulated blend, according to claim 6, wherein the coating is fat-free and comprises at least 45 wt%, preferably at least 90 wt% of sugar.

11. Encapsulated blend according to claims 6-10, wherein the filling blend of food grade filler material and fat is 95-25 wt%, preferably 80-60 wt% of the total encapsulated blend.

12. Encapsulated blend according to claims 6-11, wherein the encapsulated blend is a free flowing mass at temperatures of up to 30°C.

13. Encapsulated blend according to claims 6-12, wherein the encapsulated blend is shaped like small balls, small boxes, small cubes, with a dimension of 0.01-20 cm in particular 0.1-5 cm for the radius or for the length of one or more edges.

## Patentansprüche

1. Einschlüsse enthaltende Speiseeise, in denen die Einschlüsse eine kompakte Menge, fakultativ in eine eßbare Schicht eingekapselt, eines Gemisches aus
a) einem Füllmaterial von Nahrungsmittelqualität und
b) einem Fett
umfassen, worin das Fett einen Festfettgehalt bei der angegebenen Temperatur, gemessen gemäß Puls-NMR-Verfahren an nichtstabilisiertem Fett, von:
N₂₀ < 60, vorzugsweise < 50, insbesondere 15-40,
N₀ < 85, vorzugsweise < 80, insbesondere 55-75,
aufweist.

2. Speiseeise nach Anspruch 1, in denen das Gemisch 5-95 Gew.-%, vorzugsweise 30-60 Gew.-%, des Fettes und 95-5 Gew.-%, vorzugsweise 70-40 Gew.-%, des Füllmaterials enthält.

3. Speiseeise nach den Ansprüchen 1 oder 2, in denen das Füllmaterial von Nahrungsmittelqualität mindestens eine Verbindung ist, ausgewählt aus der Gruppe, bestehend aus: Kakaomasse, Stärken, modifizierten Stärken, Kohlenhydraten, insbesondere Zucker, Molkereipulver, Magermilchpulver, Kakaopulver und intensitätsstarken Süßungsmitteln.

4. Speiseeise nach den Ansprüchen 1 bis 3, in denen das Fett ausgewählt ist aus der Gruppe, die besteht aus:
(a) einem Gemisch aus einer Lauricstearinfraktion, insbesondere Palmkernstearin oder Kokosnußstearin, und einem flüssigen Öl, insbesondere ausgewählt aus der aus Sonnenblumenöl, Sonnenblumenöl mit hohem ölsäuregehalt, Sojaöl, Rapsöl, Olivenöl und dergleichen bestehenden Gruppe;
(b) einem pflanzlichen Nicht-Lauric-Fett oder Fettfraktion, die mindestens 35 Gew.-% zweifach gesättigte, einfach ungesättigte Triglyceride, insbesondere Palmölfraktion, gemischt mit einem flüssigen Öl, umfaßt, ausgewählt aus der aus Sonnenblumenöl, Sonnenblumenöl mit hohem Ölsäuregehalt, Rapsöl, Sojaöl, Olivenöl und dergleichen bestehenden Gruppe, und
(c) einem Gemisch aus hydriertem pflanzlichen Fett und einem flüssigen Öl.

5. Speiseeise nach den Ansprüchen 1 bis 4, in denen das Gemisch aus Füllmaterial von Nahrungsmittelqualität und Fett bei -20°C ein Härte C gemäß Stevens nach einwöchiger Lagerung bei -20°C aufweist, die plus oder minus 40 % der Härte von Kakaobutter bei 20°C nach einwöchiger Lagerung bei 20°C (0,6C_{CB bei 20°C} < C_{Gemisch bei -20°C} < 1,4 C_{CB bei 20°C}) beträgt.

6. Eingekapseltes Gemisch, das als Speiseeiseinschluß geeignet ist, in welchem das Gemisch aus Füllmaterial von Nahrungsmittelqualität und Fett gemäß den Ansprüchen 1 bis 5 in ein Überzugsmaterial eingekapselt ist.

7. Eingekapseltes Gemisch nach Anspruch 6, in welchem das Überzugsmaterial ein Fett in einer Menge von mindestens 10 Gew.-%, vorzugsweise 20-60 Gew.-% und insbesondere 25-40 Gew.%, umfaßt, welches Fett einen Festfettindex (Puls-NMR, nicht-stabilisiert) bei 20°C von mehr als 30, vorzugsweise mehr als 50, aufweist.

8. Eingekapseltes Gemisch nach Anspruch 7, in welchem der Überzug ferner mindestens 45 Gew.-%, vorzugsweise mindestens 70 Gew.-%, Füllmaterial von Nahrungsmittelqualität umfaßt.

9. Eingekapseltes Gemisch nach den Ansprüchen 6 oder 8, in welchem der Überzug eine Dicke von mindestens 0,05 mm, vorzugsweise mindestens 1 mm und insbesondere 0,2-2,5 mm, aufweist.

10. Eingekapseltes Gemisch nach Anspruch 6, in welchem der Überzug fettfrei ist und mindestens 45 Gew.-%, vorzugsweise mindestens 90 Gew.-%, Zucker umfaßt.

11. Eingekapseltes Gemisch nach den Ansprüchen 6 bis 10, in welchem das Füllungsgemisch aus Füllmaterial von Nahrungsmittelqualität und Fett 95-25 Gew.-%, vorzugsweise 80-60 Gew.-%, der gesamten eingekapselten Mischung ausmacht.

12. Eingekapseltes Gemisch nach den Ansprüchen 6 bis 11, in welchem das eingekapselte Gemisch bei Temperaturen bis zu 30°C eine freifließende Masse ist.

13. Eingekapseltes Gemisch nach den Ansprüchen 6 bis 12, in welchem das eingekapselte Gemisch wie kleine Kugeln, kleine Kapseln, kleine Würfel mit einer Dimension von 0,01-20 cm, insbesondere 0,1-5 cm, bezogen auf den Radius oder die Länge einer oder mehrerer Kanten geformt ist.

## Revendications

1. Crèmes glacées contenant des pépites, dans lesquelles les pépites comprennent une quantité compacte, optionellement encapsulée dans une couche comestible, d'un mélange de :
(a) un matériau de remplissage de qualité commerciale et
b) une matière grasse
dans lesquelles la matière grasse a une teneur en matière grasse solide à la température indiquée, mesurée selon les techniques de RMN par impulsions sur la matière grasse non stabilisée, de :
N₂₀ est inférieur à 60, de préférence inférieur à 50 et de la façon la plus préférentielle N₂₀ est compris entre 15 et 40 ;
N₀ est inférieur à 85, de préférence inférieur à 80, et de la façon la plus préférentielle, N₀ est compris entre 55 et 75.

2. Crèmes glacées selon la revendication 1, dans lesquelles le mélange comprend de 5 à 95 % en masse, de préférence de 30 à 60 % en masse de la matière grasse et de 95 à 5 % en masse, de préférence de 70 à 40 % en masse du matériau de remplissage.

3. Crèmes glacées selon la revendication 1 ou 2, dans lesquelles le matériau de remplissage de qualité alimentaire est au moins un composé sélectionné à partir du groupe composé de : la pâte de cacao, les amidons, les amidons modifiés, les hydrates de carbone, en particulier le sucre, la poudre de lait, la poudre de lait écrémé, la poudre de cacao et les édulcorants intenses.

4. Crèmes glacées selon l'une des revendications 1 - 3, dans lesquelles la matière grasse est sélectionnée à partir du groupe composé de :
(a) un mélange d'une fraction stéarique d'acide laurique, en particulier de la stéarine de noyau de palme ou de la stéarine de noix de coco et une huile liquide, en particulier sélectionnée à partir du groupe composé de l'huile de tournesol, de l'huile de tournesol hautement oléique, de l'huile de soja, de l'huile de graine de colza, de l'huile d'olive, etc.
(b) une matière grasse végétale non laurique ou une fraction grasse contenant au moins 35 % en masse de triglycérides di-saturés mono-insaturés, en particulier une fraction d'huile de palme mélangée à une huile liquide sélectionnée à partir du groupe composé de l'huile de tournesol, de l'huile de tournesol hautement oléique, de l'huile de graine de colza, de l'huile de soja, de l'huile d'olive, etc. ; et
(c ) un mélange de matière grasse végétale hydrogénée et d'un ou de plusieurs des huiles liquides mentionnées ci-dessus.

5. Crèmes glacées selon l'une des revendications 1 - 4, dans lesquelles le mélange de matériau de remplissage de qualité alimentaire et de matière grasse a, à -20°C, une dureté C conformément à Stevens après une semaine de stockage à -20°C, qui est plus ou moins 40 % la dureté d'un heurte de cacao à 20°C après un stockage d'une semaine à 20°C (0,6 C_{CB à 20°C} < C_{mélange à -20°C} < 1,4 C_{CB à 20°C}).

6. Mélange encapsulé, approprié pour être utilisé dans des pépites dans une crème glacé dans lequel le mélange de matériau de remplissage de qualité alimentaire et de matière grasse selon l'une des revendications 1 - 5, est encapsulé dans un matériau de revêtement.

7. Mélange encapsulé selon la revendication 6, dans lequel le matériau de revêtement comprend une matière grasse dans une quantité d'au moins 10 % en masse, de préférence dans une quantité allant de 20 à 60 % en masse et de la façon la plus préférentielle dans une quantité allant de 25 à 40 % en masse, ladite matière grasse ayant un indice de matière grasse solide (RMN par impulsions, non stabilisée) supérieur à 30 à 20°C, de préférence supérieur à 50.

8. Mélange encapsulé selon la revendication 7, dans lequel le matériau de revêtement comprend en outre au moins 45 % en masse, de préférence au moins 70 % en masse d'un matériau de remplissage de qualité alimentaire.

9. Mélange encapsulé selon la revendication 6 ou 8, dans lequel le revêtement a une épaisseur d'au moins 0,05 mm, de préférence d'au moins 0,1 mm, et de la façon la plus préférentielle une épaisseur comprise entre 0,2 et 2,5 mm.

10. Mélange encapsulé selon la revendication 6, dans lequel le revêtement ne contient pas de matière grasse et comprend au moins 45 % en masse, de préférence au moins 90 % en masse de sucre.

11. Mélange encapsulé selon l'une des revendications 6 à 10, dans lequel le mélange de remplissage et la matière grasse représentent 95 - 25 % en masse, de préférence 80 - 60 % en masse du mélange encapsulé total.

12. Mélange encapsulé selon l'une des revendications 6 à 11 dans lequel le mélange encapsulé est une masse s'écoulant librement à des températures allant jusqu'à 30°C.

13. Mélange encapsulé selon l'une des revendications 6 à 12, dans lequel le mélange encapsulé est sous la forme de petites boules, de petits carrés ou de petits cubes ayant une dimansion comprise entre 0,01 et 20 cm, plus particulièrement entre 0,1 et 5 cm en ce qui concerne le rayon ou la longueur d'un ou de plusieurs bords.
